(19) **Europäisches Patentamt**
**European Patent Office**
**Office européen des brevets**

(11) **EP 4 576 654 A1**

(12) **EUROPEAN PATENT APPLICATION**

(43) Date of publication:
**25.06.2025 Bulletin 2025/26**

(21) Application number: **23218989.4**

(22) Date of filing: **21.12.2023**

(51) International Patent Classification (IPC):
*H04L 9/32* $^{(2006.01)}$     *G06F 11/14* $^{(2006.01)}$

(52) Cooperative Patent Classification (CPC):
**H04L 9/3239; G06F 11/1453**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Hive Computing Services SA**
**1201 Genève (CH)**

(72) Inventors:
• **ISMAIL, Amine**
**06150 Cannes (FR)**
• **CLERGET, Antoine**
**1201 Genève (CH)**

(74) Representative: **KATZAROV S.A.**
**Geneva Business Center**
**12 Avenue des Morgines**
**1213 Petit-Lancy (CH)**

(54) **METHOD FOR FOR BACKING-UP ENCRYPTED DATA IN A MULTI-TENANT DATA PROCESSING SYSTEM FOR SUPPORTING DATA REDUNDANCY ELIMINATION PROTOCOL**

(57)     The present invention relates to a method for backing-up encrypted data in a multi-tenant data processing system, comprising the following steps:
- Defining a deduplication perimeter per tenant and associates a deduplication namespace DN for each perimeter,
- producing a deterministic encryption key KB by applying a hash function f on an object and on the deduplication namespace DN,
- encrypting the object using the encryption key KB,
- producing a fingerprint of the object by applying a hash function F' on the encrypted object,
    in order to store only a single instance of identical encrypted objects per deduplication perimeter.

**EP 4 576 654 A1**

## Description

### Technical Field

The present invention relates to the generation of encryption keys to backing up encrypted data in a multi-tenant data processing system to support data redundancy elimination protocol in a zero-knowledge architecture.

### Background

Cloud storage allows users to save data and files in an off-site location that is accessible either through the public internet or a dedicated private network connection.

A well-known alternative to traditional cloud storage in data centers are peer-to-peer (P2P) based and distributed storage.

P2P storage is a paradigm to leverage the combined storage capacity of a network of storage devices (peers) contributed typically by autonomous end-users as a common pool of storage space to store and share content and is designed to provide persistence and availability of the stored content despite unreliability of the individual autonomous peers in a decentralized environment.

P2P seeks to federate storage resources coming from multiple end-user devices to provide a global unified storage infrastructure. The federated storage space is then used by the users to securely store their data.

The user data is stored in a distributed way, so that a single user file is split into hundreds of small pieces, called chunks, that are disseminated across multiple end users nodes.

Each piece of data is identified by a unique content identifier called CID which is based on a cryptographic hash of the data content itself.

To increase the efficiency of a distributed storage system, the data is compressed before its dissemination across the storage nodes.

Deduplication of redundant data may reduce the amount of storage resources necessary to store data on storage systems. Data deduplication may involve reducing the number of copies of the same data that are stored by the storage system.

Deduplication may be implemented by one or more deduplication mechanisms detecting attempts to store duplicate data and avoiding the redundant store. Such mechanisms may be implemented by a client application and/or by a storage system.

Deduplication eliminates the need to upload and store redundant copies of user data, by verifying before each upload if a file already exists in the server's storage. Subsequent copies are replaced by pointers to the one physical data instance.

The data-deduplication thus eliminates redundancies in intra and inter files. It operates at the chunk level eliminating duplicate chunks and storing only unique chunks.

As introduced by Rabotka et al. (An Evaluation of Recent Secure Deduplication Proposals, Preprint, Elsevier Journal of Information Security and Applications, October 19, 2015), traditional encryption appears to be inherently incompatible with data deduplication. If different users encrypt the same file with different keys, the resulting ciphertexts will be different, making it impossible for the cloud storage provider to deduplicate different uploads of the same file.

Encryption can occur on the client side or in the cloud. If user data is encrypted only after it reaches the cloud, the provider can read the data, be forced to hand over the data to an external party or leak data through insider attacks. Thus, third parties may still obtain access to the user's unencrypted data without the data owner having any knowledge of the privacy breach.

If encryption occurs at the client side, and only the user is in possession of the encryption key, the cloud provider can no longer gain any insight about the data content and is thus unable to perform deduplication on the uploaded user data.

Another challenge that comes with client-side encryption is key management across different devices, as well as between users who wish to share their files with one another.

Password-derived keys are inherently unsafe for encryption, as user-chosen passwords can be brute-forced.

Convergent encryption proposes a framework which maintains data privacy in the cloud, while still allowing the cloud storage provider to perform deduplication.

Instead of using a random and user-specific key, the convergent encryption algorithm generates the encryption key from the file content itself, usually the hash of the plaintext file. This guarantees that the same plaintext will generate the same ciphertext, allowing the cloud storage provider to take advantage of deduplication while only having access to encrypted user data.

J. R. Douceur et al. (Reclaiming Space from Duplicate Files in a Serverless Distributed File System, Technical Report MSR-TR-2002-30) discloses that to encrypt a file using convergent encryption, a client first computes a cryptographically hash of the file content. The file is then encrypted using this hash value as a key. The hash value is then encrypted using the public keys of all authorized readers of the file, and these encrypted values are attached to the file as metadata.

Any authorized reader can decrypt the file by decrypting the hash value with the reader's private key and then decrypting the file content using the hash as the key.

Because the file is encrypted using its own hash as a key, the file data ciphertext is fully determined by the file data plaintext. Therefore, without knowledge of users' keys, two identical files can be determined and stored in the space of a single file.

However, conventional convergent encryption deliberately leaks a controlled amount of information, namely whether or not the plaintexts of two encrypted messages are identical.

This information allows to determine if two entities are sharing the same data.

**Summary**

The present invention is directed to a method for backing-up encrypted data in a multi-tenant data processing system, comprising the following steps:

- Defining a deduplication perimeter per tenant and associates a deduplication namespace DN for each perimeter,
- producing a deterministic encryption key KB by applying a hash function f on an object and on the deduplication namespace DN,
- encrypting the object using the encryption key KB,
- producing a fingerprint of the object by applying a hash function F' on the encrypted object,

in order to store only a single instance of identical encrypted objects per deduplication perimeter.

According to one characteristic, the deduplication perimeter is assigned either on a per user basis or across a group of users.

According to another characteristic, the deduplication perimeter is assigned either on a per volume, drive, folder, or file basis.

According to one embodiment, the deduplication namespace is only stored in the deduplication perimeter.

The method further comprises the following steps:

- Comparing the fingerprint with a fingerprint index table,
- Set pointer to existing data location or save new data to memory and its fingerprint to the fingerprint index.

The method further comprises the step wherein redundant objects identified by their fingerprint are suppressed.

The method further comprises a data decoding step.

According to one characteristic, the hash function f is a one-way hash function.

According to the previous characteristics, the one-way hash function is SHA256.

According to an embodiment, the data processing system is a peer-to-peer distributed file system comprising a plurality of nodes.

According to the previous embodiment, the fingerprint index table is a distributed hash table.

According to another embodiment, the data processing system is a centralized data center.

According to one characteristic, the object is a division of the object into a plurality of chunk, wherein each chunk of the plurality of chunk comprises a plurality of buffer of bytes.

According to the previous characteristics, each chunk of the plurality of chunk are computed to obtain an encryption key KB and a fingerprint.

According to one characteristic, the data processing system comprises at least two deduplication perimeters.

**Detailed description**

The shortcomings of the prior art are overcome by the present invention which uses convergent encryption in a zero-knowledge architecture, preventing different entities from knowing if they are sharing the same data.

It is proposed to interweave the de-duplication algorithm with the encryption algorithm in a way that the data are convergently encrypted with a key that is generated from the unencrypted data together with the perimeter where the data originally come from.

The core technology of the present invention can be categorized as compartment encryption by perimeters.

Perimeters are defined on a company, group or community, node or geographical area basis.

Perimeters can also be defined either on a per volume, drive, folder or file basis.

Perimeters are defined by tenant, as employee of a company, family members, users of a private group or community sharing a storage space, users located in the same geographical area, or private user etc.

The main goal of the invention is that tenants of different perimeters, sharing common storage space, cannot determine if they share the same data.

Deduplication of encrypted data is thus only pursued on a perimeter basis.

A perimeter in the present specification will be named deduplication perimeter, as deduplication protocol is pursued on a perimeter basis.

Each deduplication perimeter is associated with a deduplication namespace DN.

A deduplication namespace DN can be also called as a tag or a label, i.e., a short piece of information used for authenticating correspondent deduplication perimeter.

The assigned deduplication namespace is used together with the object for the generation of the deterministic encryption key KB.

According to one characteristic, the deduplication namespace is only stored in the deduplication perimeter.

The deterministic encryption key KB is thus generated by applying a hash function f on the object's hash value and on the deduplication namespace DN.

The generation of the encryption key KB can be formulated as KB=f(hash(object), DN).

The object is then encrypted using the generated encryption key KB.

The unique content identifier CID, as fingerprint of the object is then produced by applying a hash function F' on the encrypted object.

The global procedure can be written in a more formal way, such as:

$$F'=Hash(Enc(Object,encrypt\_key=f(hash(object),DN))).$$

The same clear data within the same deduplication perimeter will produce the same cipher text and the same CID.

Deduplication mechanism will perform data deduplication by detecting attempt to store redundant encrypted data.

The same clear data within different deduplication perimeters will produce different cipher text and different CID.

For instance, two companies as two tenants, which constitute two distinct perimeters can be considered, i.e, a first company T1 and a second company T2. Employees of the first company can be denoted U1_1, U1_2, ..., U1_N, while employes of the second company can be classified as U2_1, U2_2, ..., U2_M.

T1 and T2 have each a deduplication namespace that can be named DN1 and DN2. Deduplication namespaces DN1 and DN2 are used respectively by all employees U1_i and U2_i.

Deduplication protocol will thus be effective only on each deduplication perimeter, namely on the first company T1 and on the second company T2.

If U1_x and U1_y backup the same file, only one instance of the file will be stored, deduplication protocol is effectively pursued on the deduplication perimeter T1.

If U2_x and U2_y backup the same file, only one instance of the file will be stored, deduplication protocol is effectively pursued on the deduplication perimeter T2.

If U1_x and U2_y backup the same file, the file will be duplicated.

The present invention can thus be considered as a zero-knowledge architecture, where users of different tenants cannot see if they share the same data.

More precisely, backing-up data within a computer environment with a user belonging to a given tenant and processing system, i.e., a server or a peer-to-peer based and distributed storage, interconnected through a communication link comprises the step of storing at least one or several user files.

Each tenant has a deduplication namespace denoted DN.

An encrypted key KB is then generated from the user file and the deduplication namespace DN associated with the tenant the user belongs to. This encryption key KB is used for encrypting the file. A hash value denoted CID is generated from the encrypted user file. The encrypted user file and the associated hash value are forwarded to the processing system.

The user stores a mapping between the hash value i.e., CID and the corresponding encryption key KB. This mapping can be stored locally or on a remote system either centralized or distributed.

A hash map is maintained by the processing system. This hash map associates to each hash value i.e., CID, a pointer to the corresponding encrypted file.

A hash value is generated from said encrypted user file, for checking for duplicates of user file on the processing system side by comparing this hash value with all the hash values usually stored at the processing system.

In case no such hash value could be found then a mapping of the used hash value to the encrypted user file is created and stored into the hash map.

In such a way, the performed checking allows to avoid any duplicates i.e. to store only a single instance of identical encrypted files at the processing system.

In an embodiment, the user file is split in a deterministic way into chunks of data while the steps to be applied on the user file are applied instead on each of said chunks of data.

Therefore, an encryption key is generated from each of the chunks from said file and a deduplication namespace, the different encryption keys to be used for encrypting the respective chunks. Also, a specific hash value, i.e., CID for each encrypted chunk is generated for checking for duplicates of respective encrypted chunks within correspondent deduplication perimeter.

In an embodiment according to the invention, the following steps can be applied when restoring a file. A requestor requests a file from the processing system. He request is made using the encrypted file hash value, i.e., CID. A looking-up procedure to the requested file is started at the processing system by looking-up in the hash map for the encrypted user file associated with the requested hash value.

The found encrypted file is sent by the processing system to the requestor.

The requestor retrieves the encryption key KB associated with the requested hash value CID and uses it to decrypt the encrypted user file.

Even if this copy of the requested encrypted file is not the original copy coming from this requestor but a duplicate one from another user within the same deduplication perimeter, the requestor will nevertheless be able to decrypt the received encrypted file using its own encryption key KB.

## Claims

1.  Method for backing-up encrypted data in a multi-tenant data processing system, comprising the following steps:

    a) Defining a deduplication perimeter per tenant and associates a deduplication namespace DN for each perimeter,
    b) producing a deterministic encryption key KB by applying a hash function f on an object and on the deduplication namespace DN,
    c) encrypting the object using the encryption key KB,
    d) producing a fingerprint of the object by applying a hash function F' on the encrypted object,

    in order to store only a single instance of identical encrypted objects per deduplication perimeter.

2.  Method according to claim 1, wherein the deduplication perimeter is assigned either on a per user basis or across a group of users.

3.  Method according to claim 1 or 2, wherein the deduplication perimeter is assigned either on a per volume, drive, folder or file basis.

4.  Method according to any one of the preceding claims, wherein the deduplication namespace is only stored in the deduplication perimeter.

5.  Method according to any one of the preceding claims, wherein the method further comprises the following steps:

    c) Comparing the fingerprint with a fingerprint index table,
    d) Set pointer to existing data location or save new data to memory and its fingerprint to the fingerprint index.

6.  Method according to the preceding claim, wherein redundant object identified by their fingerprint are suppressed.

7.  Method according to any one of the preceding claims, wherein it further comprises a data decoding step.

8.  Method according to any one of the preceding claims, wherein the hash function f is a one-way hash function.

9.  Method according to the preceding claim, wherein the one-way hash function is SHA256.

10. Method according to any one of the preceding claims, wherein the data processing system is a peer-to-peer distributed file system comprising a plurality of nodes.

11. Method according to the preceding claim, wherein the fingerprint index table is a distributed hash table.

12. Method according to any one of claims 1 to 9, wherein the data processing system is a centralized data center.

13. Method according to any one of the preceding claims, wherein the object is a division of the object into a plurality of chunk, wherein each chunk of the plurality of chunk comprises a plurality of buffer of bytes.

14. Method according to the preceding claim, wherein each chunk of the plurality of chunk are computed to obtain an encryption key KB and a fingerprint.

15. Method according to any one of the preceding claims, wherein the data processing system comprises at least two deduplication perimeters.

Europäisches
Patentamt

European
Patent Office

Office européen
des brevets

## EUROPEAN SEARCH REPORT

**Application Number**

EP 23 21 8989

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 390 101 B1 (SCHNEIDER SCOTT [US]) 12 July 2016 (2016-07-12) <br> * column 1, line 6 - line 8; claim 1 * <br> * column 2, line 26 - line 35 * <br> * column 5, line 61 - line 63 * <br> * column 13, line 55 - line 62 * <br> * column 14, line 38 - line 39 * <br> * column 16, line 2 * <br> - - - - - | 1-15 | INV.<br>H04L9/32<br>G06F11/14 |
| X | US 2016/342814 A1 (WANG WENGUANG [US] ET AL) 24 November 2016 (2016-11-24) <br> * paragraph [0020] * <br> * paragraph [0054] * <br> * paragraph [0074] - paragraph [0075] * <br> - - - - - | 1-15 | |
| A | US 9 432 192 B1 (POGDE PRASHANT [US] ET AL) 30 August 2016 (2016-08-30) <br> * the whole document * <br> - - - - - | 1-15 | |
| A | Zooko Wilcox-O'hearn: "Hack Tahoe-LAFS!", <br> , <br> 12 December 2010 (2010-12-12), pages 1-4, XP093161140, <br> Retrieved from the Internet: <br> URL:https://web.archive.org/web/2010121223 0812/https://tahoe-lafs.org/hacktahoelafs/ drew_perttula.html <br> [retrieved on 2024-05-08] <br> * the whole document * <br> - - - - - | 1-15 | TECHNICAL FIELDS SEARCHED (IPC)<br><br>G06F<br>H04L |

-/--

The present search report has been drawn up for all claims

| Place of search | Date of completion of the search | Examiner |
|---|---|---|
| Munich | 13 May 2024 | Koblitz, Birger |

EPO FORM 1503 03.82 (P04C01)

page 1 of 2

**EP 4 576 654 A1**

Europäisches
Patentamt

European
Patent Office

Office européen
des brevets

# EUROPEAN SEARCH REPORT

**Application Number**

EP 23 21 8989

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Wikipedia: "Data deduplication - Wikipedia", ,<br>28 November 2023 (2023-11-28), pages 1-8, XP093161582,<br>Retrieved from the Internet:<br>URL:https://web.archive.org/web/2023112812 3734/https://en.wikipedia.org/wiki/Data_de duplication<br>[retrieved on 2024-05-13]<br>* the whole document *<br>----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 13 May 2024 | Koblitz, Birger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 23 21 8989

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2024

| Patent document cited in search report | | Publication date | Patent family member(s) | | Publication date |
|---|---|---|---|---|---|
| US 9390101 | B1 | 12-07-2016 | NONE | | |
| US 2016342814 | A1 | 24-11-2016 | NONE | | |
| US 9432192 | B1 | 30-08-2016 | US 9432192 B1 | | 30-08-2016 |
| | | | US 10223544 B1 | | 05-03-2019 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RABOTKA et al.** An Evaluation of Recent Secure Deduplication Proposals. *Elsevier Journal of Information Security and Applications*, 19 October 2015